# EUROPEAN PATENT APPLICATION

(11) **EP 0 825 608 A1**
(43) Date of publication of application: **25.02.1998**
(21) Application number: 97306135.1
(22) Date of filing: 12.08.1997
(51) Int. Cl.: G11B 33/04

(54) **Containers for laminar articles**

(30) Priority: 16.08.1996 GB 9617220
(71) Applicant: Duraweld Limited, Scarborough, North Yorkshire YO11 3UZ (GB)
(72) Inventor: Moorehouse, Richard McAlister, Sr., Duraweld Ltd., Scarborough, North Yorkshire, YO11 3UZ (GB)
(74) Representative: Swindell & Pearson

(57) **Abstract**

A pocket adapted to accommodate a three-dimensional laminar article such as a computer disc in a close fitting manner comprises a front panel connected at opposite sides to a back panel or other support by resilient means permitting the front panel to move away from and to slide relative to the back panel or other support while remaining essentially parallel thereto on insertion of an article into the pocket. The resilient means preferably comprise series of slits formed in the opposite side regions of the front panel and inclined downwardly and outwardly relative to the bottom and sides of the pocket respectively.

## Description

This invention relates to containers in the nature of pockets adapted to accommodate generally flat three dimensional articles and is particularly, but not exclusively, applicable to pockets for accommodating computer discs, compact discs or the like.

There is an increasing requirement to attach computer discs to books, files, magazines or other items in a secure manner but hitherto this has presented certain difficulties. Pockets produced from plastics materials and designed to accommodate computer discs or the like in a close fitting manner, require to expand to accommodate the thickness of the disc when it is inserted into the pocket. In many such pockets proposed hitherto, insertion of the disc causes the opposite sides of the pocket to be pulled upwardly and inwardly which is unsightly and can cause the pocket to become detached from the item on which it is mounted. It is possible to construct the front of the pocket from a plastics material which will stretch sufficiently to accommodate the disc, but such materials require a high polymer content and are susceptible to lifting print off the disc which is unsatisfactory. These problems can be avoided by employing a pocket which is substantially oversized compared with the size of the disc but the disc is not then sufficiently firmly held in place in the pocket.

It is an object of the present invention to obviate or mitigate these disadvantages.

According to one aspect of the invention there is provided a method of providing for expansion of a pocket to accommodate a laminar three dimensional article in a close fitting manner, comprising providing, at the opposite side regions of the pocket, resilient means permitting a front panel of the pocket to lift away from a back panel or other support on which it is mounted and to slide relative thereto in a direction parallel to said sides while remaining essentially parallel to said back panel or other support on insertion of an article into the pocket.

According to a further aspect of the invention there is provided a pocket adapted to accommodate a three dimensional laminar article in a close fitting manner, the pocket comprising a front panel connected at opposite sides to a back panel or other support by resilient means permitting the front panel to move away from and to slide relative to the back panel or other support while remaining essentially parallel thereto on insertion of an article into the pocket.

Preferably said resilient means comprises series of slits formed in the opposite side regions of the front panel and inclined downwardly and outwardly relative to the bottom and sides of the pocket respectively.

Preferably said front panel is connected to said back panel or other support along the bottom edge of the front panel. Preferably an aperture is formed in the bottom edge of the front panel to enable access to be gained to move the article relative to the pocket to assist in removing it therefrom.

The upper edge of the front panel is preferably unconnected to said back panel or other support to define an opening through which a disc or like laminar article may be inserted into the pocket. The opening may be closed by a hinged flap.

The front panel may be directly mounted on a support such as a cover of a file, folder or the like which acts as the back panel of the pocket. Preferably however the back panel comprises a sheet of similar material to the front panel and to which the latter is attached at its side and bottom edges.

Preferably the rear surface of the back panel is provided with an adhesive coating adapted to facilitate attachment of the pocket to a supporting surface. The pocket is preferably formed from polyvinylchloride (PVC).

An embodiment of the invention will now be described, by way of example only, with reference to the accompanying drawings, in which:-
Fig. 1 is a plan view of a pocket according to the invention adapted to receive and hold a computer disc;
Fig. 2 is a side view showing the manner in which the pocket expands when a disc is inserted; and
Fig. 3 is a view similar to Fig. 1 showing a disc in position in the pocket.

Referring to the drawings, the pocket is formed from transparent polyvinylchloride (PVC) and comprises a generally square back panel 5 on which is superimposed a front panel 6. The opposite side regions 7A,7B and the bottom region 8 of the front panel 6 are secured to the back panel by adhesive, the panels being unconnected at the upper edge 9 of the front panel to define an opening through which a computer disc may be inserted into the pocket. A flap 10 is hingedly connected at its upper edge 11 to the back panel 5 and forms a flap which can be closed over the inserted disc to retain it in position in the pocket. A portion of the front panel is cut away at its lower region to define an aperture 12 by means of which access can be gained to the lower edge of the disc to push it upwardly when it is desired to remove it from the pocket. The rear surface of the back panel 5 is provided with an adhesive coating or with adhesive coated areas to enable attachment of the pocket to a desired support or carrier, such as the cover of a book, a file or a document holder.

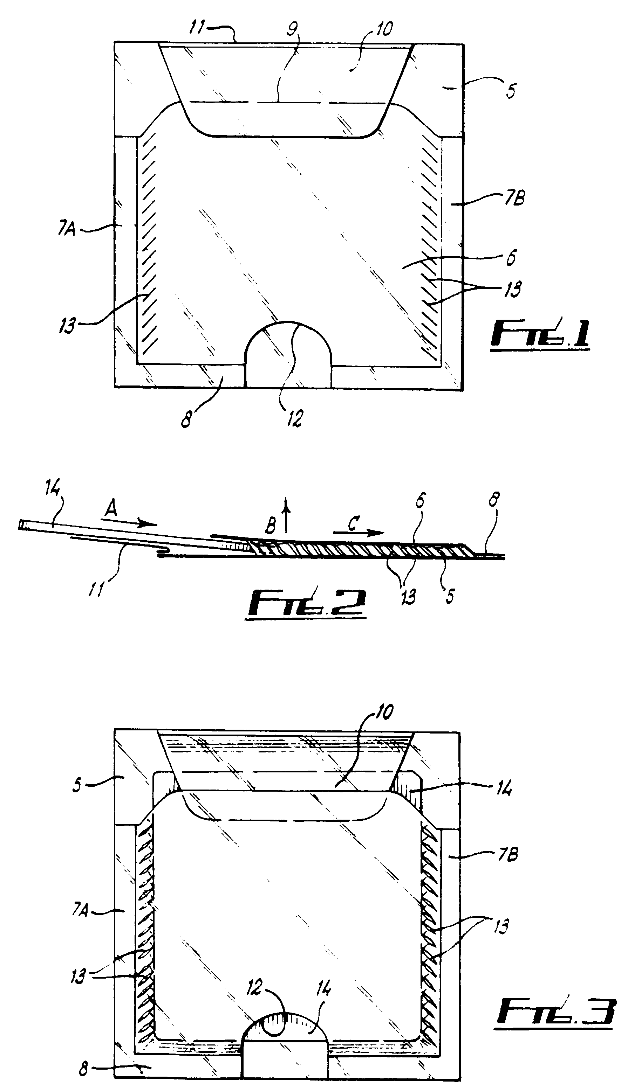

The side regions of the upper panel 6 immediately inwardly of the edges 7A and 7B are provided with series of inclined slits 13 which are angled upwardly and inwardly from the adjacent side regions. By virtue of the provision of these slits, when a computer disc 14 is inserted into the pocket as indicated by the arrow A in Fig. 2, the front panel 6 of the pocket moves bodily away from the back panel 5 in the direction of arrow B and slides relative to the back panel 5 in the direction of arrow C while remaining essentially parallel to the back panel. In this way the pocket expands to accommodate the disc without pulling the sides of the back panel 5 inwardly. A degree of lost motion is in effect built into the front panel 6 by virtue of the arrangement of slits at the sides which enables it to move bodily in two directions relative to the back panel to accommodate the disc while still lying parallel to the back panel. The inherent resilience of the plastics material from which the pocket is made tends to return the front panel towards its initial position and the disc is therefore firmly held between the front and back panels. The flap 11 is provided to form a positive closure to assist in holding the disc in place if, for example, the pocket is inverted with the disc located in it.

In order to remove the disc, the flap 11 is opened and a finger or implement engaged with the bottom end of the disc through the aperture 12. The disc may thus be pushed upwardly relative to the pocket so that an increased area of the disc projects from the upper open end of the pocket to facilitate removal.

The pocket described is of essentially simple construction yet overcomes the disadvantages of previous arrangements. The manner in which the front and back panels are interconnected enables the pocket to expand to accommodate the disc without pulling the sides of the back panel upwardly as in the case of some prior arrangements. Moreover since the inclined slits permit the front panel to move bodily relative to the back panel, the pocket expands to accommodate the disc without requiring the use of high polymer content material or requiring the pocket to be substantially oversized relative to the disc. The product may also be easily and cheaply manufactured.

Various modifications may be made without departing from the invention. For example while in the embodiment described, the pocket comprises front and back panels interconnected at their sides, the pocket may be formed by a similar front panel directly connected to a backing sheet forming part of another article such as the cover of a file, folder or the like. The number, length, arrangement and angle of inclination of the inclined slots may also be varied and the pocket need not be provided with a separate closure flap or with a bottom cut-out although these features are preferred. The pocket need not be transparent and may be constructed from different plastics or other sheet materials, such as polypropylene, paper or card. Moreover, while reference has been made herein to pockets for accommodation of computer discs, similar pockets may be employed to accommodate other generally flat or laminar articles such as audio or video tapes or compact discs.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A method of providing for expansion of a pocket to accommodate a laminar three dimensional article in a close fitting manner, characterised by providing, at the opposite side regions (7A,7B) of the pocket, resilient means (13) permitting a front panel (6) of the pocket to lift away from a back panel or other support (5) on which the front panel is mounted and to slide relative to the back panel or support in a direction parallel to said sides, whereby on insertion of an article (14) into the pocket the front panel adopts a position spaced from and parallel to said back panel or other support without pulling the sides of the pocket inwardly.

2. A pocket adapted to accommodate a three dimensional laminar article in a close fitting manner, the pocket comprising a front panel connected at opposite sides to a back panel or other support, characterised by that connection is effected by resilient means (13) permitting the front panel (6) to move away from and to slide relative to the back panel or other support (5) while remaining essentially parallel thereto on insertion of an article (14) into the pocket.

3. A pocket according to claim 2 characterised in that said resilient means comprises series of slits (13) formed in the opposite side regions (7A,7B) of the front panel (16) and inclined downwardly and outwardly relative to the bottom and sides of the pocket respectively.

4. A pocket according to claim 2 or 3 characterised in that said front panel (6) is connected to said back panel or other support (5) along the bottom edge (18) of the front panel.

5. A pocket according to claim 4 characterised in that an aperture (12) is formed in the bottom edge (8) of the front panel (6) to enable access to be gained to move the article (14) relative to the pocket to assist in removing it therefrom.

6. A pocket according to any of claims 2 to 5 characterised in that the upper edge (9) of said front panel (6) is unconnected to said back panel or other support (5) to define an opening through which a disc or like laminar article (14) may be inserted into the pocket.

7. A pocket according to claim 6 characterised in that said opening is adapted to be closed by a hinged flap (10).

8. A pocket according to any of claims 2 to 7 characterised in that said front panel is directly mounted on a cover of a file, folder or other support which acts as the back panel of the pocket.

9. A pocket according to any of claims 2 to 7 characterised in that said back panel comprises a sheet (5) of similar material to the front panel (6) and to which the latter is attached at its side and bottom edges.

10. A pocket according to claim 9 characterised in that said back panel (5) is provided with an adhesive coating adapted to facilitate attachment of the pocket to a supporting surface.

11. A pocket according to any of claims 2 to 10 characterised in that at least said front panel (6) is made from polyvinylchloride (PVC).

12. A file, folder, cover or other article characterised in that it incorporates a pocket according to any of claims 2 to 11.

13. A sheet of flexible material adapted to form a pocket for the accommodation of a three-dimensional laminar article, comprising side and bottom edge regions surrounding a central panel characterised by series of slits (13) formed at the sides of said centre panel (6) adjacent said side edge regions, the slits of each series being inclined downwardly and outwardly towards the bottom (8) and side edge (7A,7B) regions respectively.

14. A pocket characterised in that it is formed from a sheet of flexible material according to claim 13.
